# EUROPÄISCHE PATENTANMELDUNG

(11) **EP 1 223 359 A1**
(43) Veröffentlichungstag der Anmeldung: **17.07.2002**
(21) Anmeldenummer: 01890008.4
(22) Anmeldetag: 10.01.2001
(51) Int. Cl.: F16C 33/76, F16C 33/66, F16C 19/16

(54) **Dichtungsbüchse für das Lager eines Unterwassergenerators**

(71) Anmelder: Dipl.Ing. Hitzinger Gesellschaft m.b.H., 4010 Linz (AT)
(72) Erfinder: Kronlachner, Dagmar, Ing., 4010 Linz (AT); Roland, Helmut, Ing., 4010 Linz (AT)
(74) Vertreter: Hübscher, Helmut, Dipl.-Ing.

(57) **Zusammenfassung**

Bei einem Unterwassergenerator, dessen Gehäuse (5, 6, 15) im Wasserstrom einer auf seiner herausgeführten Welle (18) sitzenden Turbine (19) anbringbar ist, werden die der Axial- und Radialabstützung der Welle (18) dienenden Lager (29, 33, 34) ausschließlich innerhalb des an den Enden durch Lagerschilde (19) bzw. Schließkappen (15) abgedichteten rohrförmigen Gehäuses (5) angebracht. Die Welle (18) wird zur Turbine (19) durch eine Dichtungsbüchse (23) herausgeführt, in der wenigstens zwei zur Welle (18) gerichtete Lippendichtungen (24, 25) vorgesehen sind und der Zwischenraum der Dichtungen (24, 25) ist über eine Zentralschmierung (31, 32, 36) mit Fett beaufschlagbar, wobei die Zentralschmierung (36) auch der Schmierung der Lager (29, 33, 34) selbst dient.

## Beschreibung

Die Erfindung betrifft einen Unterwassergenerator, dessen Gehäuse im Wasserstrom einer auf seiner herausgeführten Welle sitzenden Turbine anbringbar ist.

Eine derartige Baueinheit ermöglicht die Erzeugung elektrischer Energie in relativ einfach ausgeführten Strömungskanälen bzw. Rohren. Derzeit ist der Unterwassergenerator in Matrixanordnung einer Vielzahl solcher Generatoren dafür bestimmt, die sonst verlorene Energie bei der Füllung und Entleerung der Schleusenkammern bei Kraftwerken auszunützen. Zu diesem Zweck wird die erwähnte Matrix in den Füll- bzw. Entleerungsschacht der Schleuse eingesetzt. Weitere Anwendungsmöglichkeiten ergeben sich bei verschiedensten Druckleitungen, wobei auch die Möglichkeit besteht, mit Hilfe einfacher Rohrleitungen, in die der Unterwassergenerator eingesetzt wird, ohne aufwendige sonstige Maßnahmen elektrische Energie zu erzeugen.

Der einschlägige Stand der Technik ist durch die CH 337 926 A, die DE 19 508 386 A, DE 19 528 267 A und die EP 361 333 A belegt.

Aufgabe der Erfindung ist es, einen Unterwassergenerator zu schaffen, der eine hohe Lebensdauer besitzt, einfach gewartet bzw. überwacht werden kann, ein günstiges Volumen/Leistungsverhältnis aufweist und auch bei stark wechselndem Gefälle einsetzbar ist. Eine Teilaufgabe der Erfindung besteht darin, einen Unterwassergenerator zu schaffen, der problemlos auch bei wechselnder Durchströmungsrichtung eingesetzt werden kann. Insbesondere soll durch die Erfindung auch die Aufgabe gelöst werden, die für den Unterwasserbetrieb besonders wesentliche einwandfreie Abdichtung des Gehäuseinnenraumes über lange Zeiträume zu gewährleisten und dabei eine laufende Überwachung zu ermöglichen.

Die gestellten Hauptaufgaben werden erfindungsgemäß durch die Merkmale des Patentanspruches 1 gelöst.

Die besondere Art der Abdichtung ist äußerst wirksam, wobei die zusätzliche Fettzufuhr zwischen die Lippendichtungen auf jeden Fall ein tieferes Eindringen von Flüssigkeit in den Innenraum des Generators verhindert. Trotzdem ergibt sich eine einfache Bauweise, da sowohl der erwähnte Dichtungszwischenraum als auch die Lager über eine Zentralschmierung beaufschlagt werden. Überschüssiges bzw. verbrauchtes Fett kann an den Dichtungen nach außen austreten und wird an den Lagern selbst in entsprechend groß dimensionierten Vorratstaschen aufgenommen. Durch eine entsprechende Zentralschmierung mit Folgesteuereinrichtung ergibt sich die Möglichkeit, mit einer einzigen äußeren Fettzuführung zu dieser Zentralschmiereinheit das Auslangen zu finden, wobei bei der Matrixanordnung mehrerer Unterwassergeneratoren für deren Einzelbeschickung wieder kaskadenartig einer Hauptzentralschmiereinheit nachgeordnete Verteilereinrichtungen Verwendung finden können.

Bei einer bevorzugten Weiterbildung gemäß Anspruch 2 bleibt durch den Überdruck des zugeführten Fettes der Zwischenraum mit Fett gefüllt, wobei dieser Überdruck des Fettes größer als die im Brauchwasser herrschenden Drücke gewählt wird.

Um den Verschleiß bzw. die Reibungsverluste möglichst gering zu halten, wird eine Weiterbildung gemäß Anspruch 3 vorgesehen.

Herkömmliche Lagerkonstruktionen benötigen für die Aufnahme von wechselnden Axialkräften zwei Lager zur Aufnahme dieser Axialkräfte und noch wenigstens ein Radiallager an der entsprechenden Lagerstelle. Im Normalfall benötigen diese Lagerkonstruktionen eine Ölschmierung, um einen hohen Drehzahlbereich z. B. beim Durchgehen der Turbine zu gewährleisten. Erfindungsgemäß wird demgegenüber eine Ausgestaltung gemäß Anspruch 4 vorgesehen. Ohne die vorgesehenen Federn könnte sich insbesondere bei dem momentan von der Axialkraft nicht belastete Lager der Außenring verstellen, was zu Lagerschäden führen würde. Kegelrollenlager sind grundsätzlich für die Fettschmierung geeignet.

Eine weitere Sicherungs- und Überwachungsmaßnahme ist in Anspruch 5 angegeben. Dabei zeigt ein zu hoher Luftverbrauch das Auftreten von Undichtheiten an, so daß allenfalls die Notwendigkeit einer Wartung festgestellt, dabei aber weiterhin der Wassereintritt verhindert wird. Die Drucküberwachung bzw. Druckluftzufuhr muß nicht dauernd erfolgen, sondern kann in empirisch feststellbaren Perioden vorgenommen werden. Weitere Überwachungseinrichtungen können einen oder mehrere, an kritischen Stellen verteilte Temperaturfühler umfassen. Für die Drehzahlüberwachung werden derzeit optische, auf Unterbrechungen eines Lichtstrahles ansprechende Fühler bevorzugt, da diese nicht von den herrschenden elektromagnetischen Feldern beeinflußt werden.

Auf weitgehende Korrosionsbeständigkeit wird durch eine Ausgestaltung gemäß Anspruch 6 Rücksicht genommen. Eine Schweißverbindung zwischen Gehäuse und Staplerblechpaket könnte zu einer Beeinträchtigung der Korrosionsbeständigkeit und auch zu einer Verformung des Gehäuses führen.

Das Gehäuse liegt im Wasserstrom der Turbine. Es muß daher danach getrachtet werden, möglichst günstige Strömungsverhältnisse um das Gehäuse zu schaffen, also Strömungsablösungen oder Wirbelbildungen am Gehäuse zu vermeiden. Dazu trägt eine Ausführung gemäß Anspruch 7 bei. Besonders wichtig ist diese Ausführung für einen in der Turbinennähe am Gehäuse vorzusehenden Flanschring. Dabei kann eine Ausgestaltung gemäß Anspruch 8 vorgenommen werden.

Bei den meisten herkömmlichen elektronischen Maschinen, insbesondere auch bei Synchron- und Asynchrongeneratoren, wird ein im wesentlichen quadratischer Längsschnitt angestrebt, was bedeutet, daß der Außendurchmesser des Statorblechpaketes etwa gleich der Statorlänge ist. Erfindungsgemäß wird demgegenüber eine völlig abweichende Konstruktion gemäß Anspruch 9 bevorzugt,.

Durch die Anpassung des Gehäusedurchmessers an den Nabendurchmesser der Turbine werden günstige Strömungsverhältnisse erreicht. Dabei wird durch Vergrößerung der Maschinenlänge gegenüber dem Außendurchmesser bei vorgegebenem Durchmesser auch eine entsprechende Vergrößerung der Leistung gegenüber einer quadratischen Maschine erhalten. Für die Erfindung wesentlich ist hier aber, daß bei einem entsprechend hohen Gewicht/Leistungsverhältnis des Generators auf die Kühlung besonderes Augenmerk zu legen ist. Neben der schon erwähnten Überwachung durch Temperaturfühler zeigt sich, daß der Großteil der erzeugten Wärme über den rohrförmigen Teil des Gehäuses abgeführt wird. Eine gute Kühlung ergibt sich also durch eine relativ große, durch die Maschinenlänge erreichte Mantelfläche des rohrförmigen Gehäuseteiles.

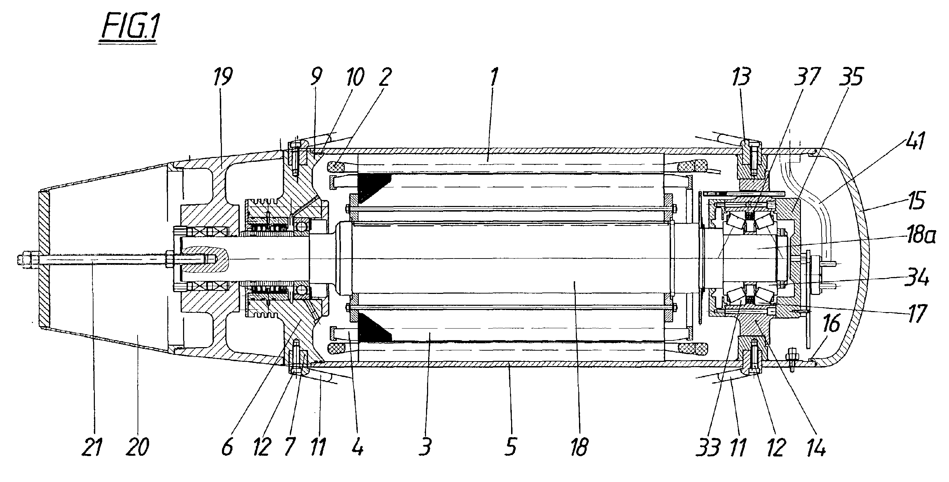

Weitere Einzelheiten und Vorteile des Erfindungsgegenstandes entnimmt man der nachfolgenden Zeichnungsbeschreibung. In der Zeichnung ist der Erfindungsgegenstand beispielsweise veranschaulicht. Es zeigen
- Fig. 1: einen erfindungsgemäßen Generator im Teillängsschnitt,

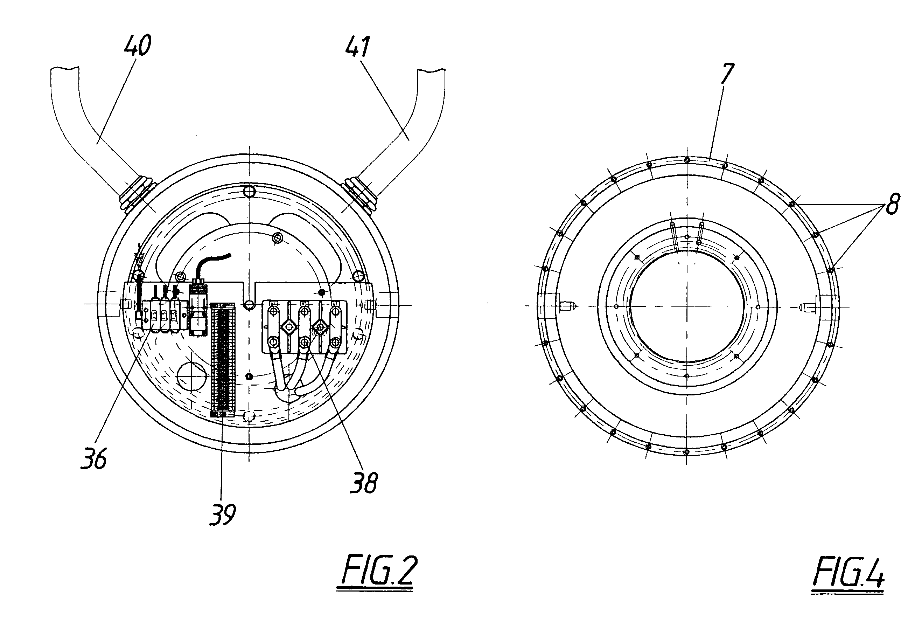

- Fig. 2: eine Rückansicht zu Fig. 1 bei abgenommenem hinterem Gehäusedekkel,
- Fig. 3: als Detail einen Schnitt durch das vordere Lagerschild im Lager- und Dichtungsbereich und
- Fig. 4: ebenfalls als Detail die Befestigung des vorderen Flanschringes am Gehäuse, ebenfalls im Schnitt.

Beim Ausführungsbeispiel ist der Unterwassergenerator als Asynchronmaschine ausgeführt. Er besitzt einen Stator mit Statorblechpaket 1 und Statorwicklung 2 sowie einen Rotor mit Rotorblechpaket 3 und einen Kurzschlußläuferkäfig 4. Das Statorblechpaket 1 ist im Paßsitz in ein rohrförmiges Gehäuse 5 eingesetzt und in diesem drehfest durch eine Nut-Federverbindung gehalten. Das rohrförmige Gehäuse 5 selbst besteht aus korrosionsbeständigem Stahl. Das Vorderende des Gehäuses 5 ist durch ein Lagerschild 6 abgeschlossen, in das ein Flanschring 7 integriert ist, der (siehe Fig. 4) mit einer Vielzahl kleiner Schrauben 8, die in das rohrförmige Gehäuse 5 eingreifen, am rohrförmigen Gehäuse befestigt ist, wobei eine Schulter 9 mit eingesetzten O-Ringen 10 innen am Gehäuseende anliegt. Wie angedeutet wurde, ragt der Flanschring kaum über die Außenseite des Gehäuses vor und dient dazu, eine Aufhängevorrichtung 11 mit Schrauben 12 zu befestigen. Ein weiterer Flanschring 13 ist in ein hinteres Lagerschild 14 integriert, wobei hier aber das Gehäuse über diesen Flanschring 13 hinaus verlängert und am Ende durch eine Kappe 15 abgeschlossen ist, die wieder eine Schulter 16 mit eingelegten Dichtungen 17 umfaßt.

Für den Unterwassergenerator ist eine mehrfach abgesetzte Welle 18 vorgesehen, die durch das vordere Lagerschild 6 herausführt und eine Propellerturbine trägt, von der nur die Nabe 19 dargestellt wurde. Vor dieser Nabe ist noch eine Abdeckkappe 20 mittels einer Schraube 21 an der Welle 18 befestigt.

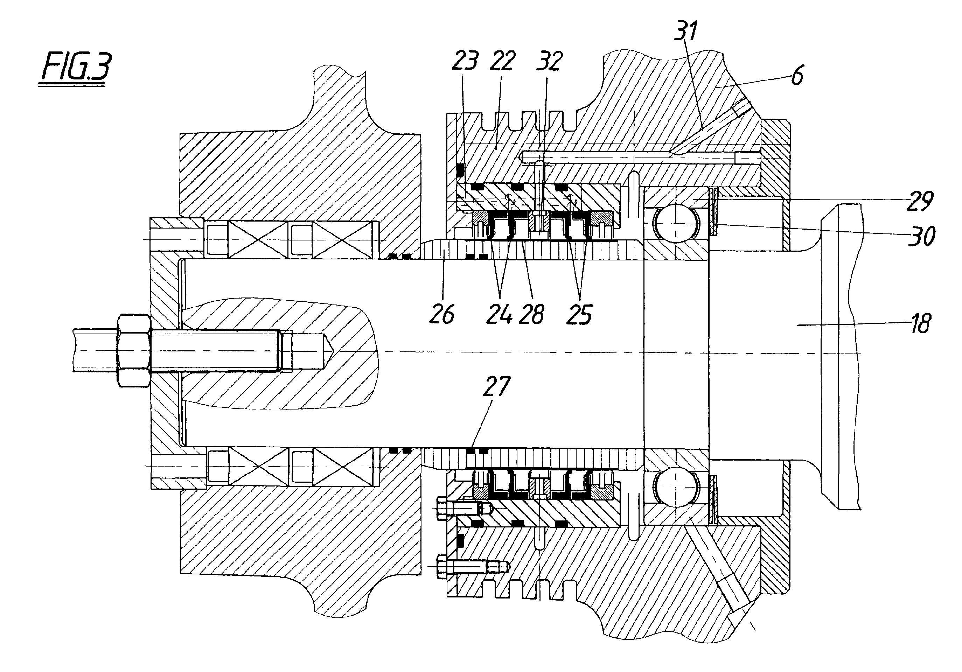

Wie insbesondere aus Fig. 3 ersichtlich ist, bildet das Lagerschild 6 wellenseitig eine Büchse 22, in die unter Zwischenschaltung von Dichtungen eine Trägerhülse 23 für zwei Dichtlippenpaare 24, 25 eingesetzt ist, wobei diese Dichtlippen nach entgegengesetzten Seiten weisend mit einer ihrerseits auf die Welle 18 aufgesetzten Hülse 26 in Eingriff stehen, die gegenüber der Welle zusätzlich über O-Ringe 27 abgedichtet wird und mit einem Belag 28 aus besonders günstige Gleit- und Verschleißeigenschaften aufweisendem Material versehen ist. Neben der Hülse 26 ist auf der Welle der Innenring eines Wälzlagers 29 angebracht, das durch eine Feder 30 angepreßt wird. Eine Bohrung 31 ist an die Zuleitung einer Zentralschmiereinheit angeschlossen, wobei diese Bohrung 31 zu Schmierstellen 32 zwischen den Dichtungen 24, 25 und einer Schmierstelle am Lager 29 verzweigt ist.

Im Lagerschild 14 sind zwei Kegelrollenlager 33, 34 gegengleich mit zueinander und zur Welle abfallenden Achsen der Kegelrollen angeordnet, unter Zwischenschaltung eines Distanzhalters am Wellenendstummel 18a abgestützt und von einem Außengehäuse 35 umgeben, das Taschen für die Aufnahme von überschüssigem Fett enthält. Zwischen den Lagern 33, 34 mündet wieder die Auslaßbohrung einer an eine Zentralschmiereinheit 36 angeschlossenen Leitung und die beiden Außenringe der Lager 33, 34 sind gegeneinander durch am Umfang verteilte Druckfedern 37 abgestützt, um zu gewährleisten, daß sich diese Außenlagerringe bei der Entlastung durch die auf die Welle 18 wirkende Schubkraft nicht nachteilig verstellen. Außen sind am Teil 35 die Elemente der Zentralschmierung und die üblichen Anschlußklemmen 38 für die Maschine sowie weitere Anschlußklemmen 39 für Überwachungseinheiten, z. B. Drehzahl- und Temperaturfühler, angebracht. Die Hilfsleitungen sind in ein abgedichtetes Rohr 40 geführt, das auch die Fettzufuhr aufnimmt und gegebenenfalls mit einer Druckluftquelle verbunden werden kann. Es wäre auch ein eigener Druckluftanschluß möglich. Ein weiteres Anschlußrohr 41, das auch flexibel sein kann, nimmt die Leitungen der Hauptstromkreise und der Steuerstromkreise für die Maschine auf.

Im Ausführungsbeispiel wurde ein Unterwassergenerator beschrieben. Es wäre ohne wesentliche konstruktive Änderungen auch möglich, diese dann als Motor zu betreibende Maschine mit einer Schiffsschraube zu versehen und beispielsweise als Aktivruder im Schiffsbau einzusetzen.

## Patentansprüche

1. Unterwassergenerator, dessen Gehäuse (5, 6, 15) im Wasserstrom einer auf seiner herausgeführten Welle (13) sitzenden Turbine (19) anbringbar ist, **dadurch gekennzeichnet, daß** die der Axial- und Radialabstützung der Welle (18) dienenden Lager (29, 33, 34) ausschließlich innerhalb des an den Enden durch Lagerschilde (19) bzw. Schließkappen (15) abgedichteten rohrförmigen Gehäuses (5) angebracht sind, die Welle (18) zur Turbine (19) durch eine Dichtungsbüchse (23) herausgeführt ist, in der wenigstens zwei zur Welle (18) gerichtete Lippendichtungen (24, 25) vorgesehen sind und der Zwischenraum der Dichtungen (24, 25) über eine Zentralschmierung (31, 32, 36) mit Fett beaufschlagbar ist, wobei die Zentralschmierung (36) auch der Schmierung der Lager (29, 33, 34) selbst dient.

2. Unterwassergenerator nach Anspruch 1, **dadurch gekennzeichnet, daß** für eine wechselweise in beiden Axialrichtungen beaufschlagbare Turbine (19) zwei entgegengesetzt gerichtete Dichtlippenpaare (24, 25) vorgesehen sind, um einerseits gegen einen herrschenden statischen Außendruck und anderseits gegen einen in der Maschine herrschenden bzw. erzeugten Überdruck abzudichten, wobei die Fettzufuhr (32) der Zentralschmierungseinheit (36) zwischen den beiden Dichtlippenpaaren (24, 25) mündet.

3. Unterwassergenerator nach Anspruch 1 oder 2, **dadurch gekennzeichnet, daß** auf die Welle (18) eine mit den Dichtlippen (24, 25) in Eingriff stehende Hülse (26, 28) aus verschleißfestem, günstige Gleiteigenschaften aufweisendem Material aufgesetzt und zusätzlich gegenüber der Welle (18) über in Innenringnuten eingesetzte O-Ringe (27) abgedichtet ist.

4. Unterwassergenerator nach einem der Ansprüche 1 bis 3, **dadurch gekennzeichnet, daß** für das von der Turbine abweisende Wellenende (18a) zwei der Axial- und Radialabstützung dienende Schrägrollen- insbesondere Kegelrollenlager (33, 34), gegengleich mit zueinander und zur Welle geneigten Rollenachsen vorgesehen sind, die Fettzufuhr der Zentralschmiereinheit (36) zwischen diesen Lagern mündet und zwischen den Außenringen der beiden Lager (33, 34) Stützfedern (37) vorgesehen sind, die an dem vom momentan über die Welle wirkenden Axialschub nicht belasteten Lager entgegengesetzt wirkende Axialkräfte zur Vermeidung von Lagerschäden erzeugen.

5. Unterwassergenerator nach einem der Ansprüche 1 bis 4, **dadurch gekennzeichnet, daß** das Gehäuse (5, 6, 15) zur Erzeugung eines inneren Überdruckes gegenüber dem herrschenden Wasserdruck über wenigstens eine Zufuhrleitung (40) mit Druckluft beaufschlagbar und eine Überwachungseinheit für die nach der Erstfüllung zugeführte Luftmenge vorgesehen ist.

6. Unterwassergenerator nach einem der Ansprüche 1 bis 5, **dadurch gekennzeichnet, daß** das rohrförmige Gehäuse (5) aus korrosionsbeständigem Stahl besteht, wobei das Statorblechpaket (1) des Generators im Paßsitz in das Gehäuse eingreift und vorzugsweise über eine Nut-Federverbindung drehfest mit dem Gehäuse verbunden ist.

7. Unterwassergenerator nach einem der Ansprüche 1 bis 6, **dadurch gekennzeichnet, daß** Flanschringe (6) zur Anbringung von den Generator in seinem Anbringungsbereich festhaltenden Trägern (11) wenigstens zum größten Teil innerhalb des Gehäusedurchmessers angebracht und unter Zwischenschaltung von Dichtungen (10) mit einer Vielzahl von im wesentlich axial angebrachten Schrauben (8), deren Durchmesser kleiner als die Rohrwandstärke ist, mit dem Gehäuserohr (5) verbunden sind.

8. Unterwassergenerator nach einem der Ansprüche 1 bis 7, **dadurch gekennzeichnet, daß** das turbinenseitige Lagerschild (6) mit dem einen Flanschring (7) eine bauliche Einheit bildet, mit den Schrauben (8) des Flanschringes am Gehäuse (5) befestigbar ist und mit einer Schulter (9) in das rohrförmige Gehäuse (5) eingreift, wobei zwischen dieser Schulter (9) und dem Gehäuse Dichtungseinlagen (10), insbesondere in Ringnuten der Schulter eingesetzte O-Ringe vorgesehen sind.

9. Unterwassergenerator nach einem der Ansprüche 1 bis 8, **dadurch gekennzeichnet, daß** der Außendurchmesser des Gehäuses (5) etwa dem Nabendurchmesser einer an der Welle (18) anbringbaren Propellerturbine (19) entspricht und die Stator- und Rotorlänge des vorzugsweise als Asynchronmaschine mit Kurzschlußläufer (3, 4) ausgeführten Generators wenigstens um 20 %, vorzugsweise mehr als 50 %, größer als der Außendurchmesser des Stators (1) gewählt ist.
